(19)

**Europäisches Patentamt**
**European Patent Office**
**Office européen des brevets**

(11) **EP 4 122 249 B1**

(12) **EUROPEAN PATENT SPECIFICATION**

(45) Date of publication and mention
of the grant of the patent:
**07.05.2025 Bulletin 2025/19**

(21) Application number: **21776567.6**

(22) Date of filing: **23.03.2021**

(51) International Patent Classification (IPC):
*H04W 52/02* (2009.01)    *H04W 52/32* (2009.01)

(52) Cooperative Patent Classification (CPC):
**H04L 5/0053; H04W 74/0833; H04L 5/0007;**
**H04L 5/0064**

(86) International application number:
**PCT/CN2021/082437**

(87) International publication number:
**WO 2021/190510 (30.09.2021 Gazette 2021/39)**

(54) **METHOD OF INITIAL ACCESS IN WIRELESS COMMUNICATIONS AND RELATED DEVICE**

METHODE DES ERSTZUGRIFFS IN DER DRATLOSEN KOMMUNIKATION UND VERWANDTES GERÄT

MÉTHODE D'ACCÈS INITIAL DANS LES COMMUNICATIONS SANS FIL ET DISPOSITIF ASSOCIÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.03.2020 US 202062993613 P**

(43) Date of publication of application:
**25.01.2023 Bulletin 2023/04**

(73) Proprietor: **Sharp Kabushiki Kaisha**
**Sakai-shi, Osaka 590-8522 (JP)**

(72) Inventors:
• **WANG, Haihan**
**Taipei 114**
**Taiwan (TW)**
• **YU, Chiahao**
**Taipei 114**
**Taiwan (TW)**

(74) Representative: **Müller-Boré & Partner**
**Patentanwälte PartG mbB**
**Friedenheimer Brücke 21**
**80639 München (DE)**

(56) References cited:
WO-A1-2018/128427    WO-A1-2019/214500
WO-A1-2020/017434    WO-A1-2020/017434
CN-A- 110 831 126    US-A1- 2019 313 437
US-A1- 2021 289 536

• **LG ELECTRONICS: "RMSI delivery and CORESET configuration", vol. RAN WG1, no. Nagoya, Japan; 20170918 - 20170921, 17 September 2017 (2017-09-17), XP051339302, Retrieved from the Internet <URL:http://www.3gpp.org/ftp/Meetings_3GPP_SYNC/RAN1/Docs/> [retrieved on 20170917]**
• **MEDIATEK INC.: "Remaining Issues on DCI Contents and Formats", 3GPP DRAFT; R1-1804045 REMAINING ISSUES ON DCI CONTENTS AND FORMATS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sanya, China; 20180416 - 20180420, 15 April 2018 (2018-04-15), Mobile Competence Centre ; 650, route des Lucioles ; F-06921 Sophia-Antipolis Cedex ; France, XP051426334**

**Description**

FIELD

The present disclosure is generally related to wireless communications and, more specifically, to a method of initial access for a user equipment (UE) and a UE for performing an initial access.

BACKGROUND

With the tremendous growth in the number of connected devices and the rapid increase in user/network traffic volume, various efforts have been made to improve different aspects of wireless communication for the next-generation wireless communication system, such as the fifth-generation (5G) New Radio (NR), by improving data rate, latency, reliability, and mobility.

The 5G NR system is designed to provide flexibility and configurability for optimizing the network services and types, accommodating various use cases such as enhanced Mobile Broadband (eMBB), massive Machine-Type Communication (mMTC), and Ultra-Reliable and Low-Latency Communication (URLLC).

However, as the demand for radio access continues to increase, there is a need for further improvements in wireless communication for the next-generation wireless communication system.

US 2019/313437 A1 describes a method, for configuring bandwidth parts, including: receiving a first bandwidth part configuration for a first downlink bandwidth part and a second bandwidth part configuration for a second downlink bandwidth part; receiving an indication to receive downlink signals and channels in the first downlink bandwidth part; identifying a control resource set and a corresponding search space for a type of physical downlink control channel common search space within a bandwidth of the first downlink bandwidth part from the second bandwidth part configuration; monitoring physical downlink control channel candidates on the control resource set; and receiving a physical downlink control channel on the control resource set, wherein the physical downlink control channel includes downlink control information associated with the type of physical downlink control channel common search space.

WO 2020/017434 A1 describes a terminal device provided with: a reception unit which receives a MIB that sets a first CORESET, receives a SIB 1 that sets a second CORESET, receives first information that sets an initial UL BWP and second information that sets an additional UL BWP, and receives, in a common search space, a first DCI format that schedules a PUSCH, wherein an active UL BWP is one of the initial ULBWP and the additional UL BWP; and a transmission unit which, on the basis of a first field included in the first DCI format, identifies an allocated resource block set and transmits the PUSCH with the active UL BWP. A first value indicated by the first field is given on the basis of the size of the initial UL BWP, a first start position which is the start position for setting the allocated resource block, and the number of successively allocated first resource blocks, and the common search space is used for a random access procedure.

LG Electronics, "RMSI delivery and CORESET configuration", 3GPP TSG RAN WG1 Meeting NR#3, Nagoya, Japan, 18th - 21st September 2017, 3GPP Draft R1-1715842, discusses how to deliver RMSI, and how to configure CORESET with common search space.

SUMMARY

The above and other objects are achieved by a method of initial access for a user equipment (UE) and a UE for performing an initial access as defined in the independent claims, respectively. Preferred embodiments are set forth in the dependent claims.

BRIEF DESCRIPTION OF THE DRAWINGS

Aspects of the present disclosure are best understood from the following detailed disclosure when read with the accompanying drawings. Various features are not drawn to scale. Dimensions of various features may be arbitrarily increased or reduced for clarity of discussion.

FIG. 1 is a timing/frequency diagram illustrating a reference point for a physical resource block (PRB) offset, according to an implementation of the present disclosure.

FIG. 2 is a timing diagram illustrating downlink control information (DCI) repetitions, according to an implementation of the present disclosure.

FIG. 3 is a timing/frequency diagram illustrating configurations of downlink (DL) bandwidth parts (BWPs), according to an implementation of the present disclosure.

FIG. 4 is a flowchart illustrating a method of initial access for a user equipment (UE), according to an implementation of the present disclosure.

FIG. 5 is a block diagram illustrating a node for wireless communication, according to an implementation of the present disclosure.

DESCRIPTION

The following disclosure contains specific information pertaining to exemplary implementations in the present disclosure. The drawings and their accompanying detailed disclosure are directed to exemplary implementations. However, the present disclosure is not limited to these exemplary implementations. Other variations and implementations of the present disclosure will occur to those skilled in the art. Unless noted otherwise, like or corresponding elements in the drawings may be indicated by like or corresponding reference numerals. Moreover, the drawings and illustrations are generally not to scale and are not intended to correspond to actual relative dimensions.

For consistency and ease of understanding, like features are identified (although, in some examples, not shown) by reference designators in the exemplary drawings. However, the features in different implementations may be different in other respects, and therefore shall not be narrowly confined to what is shown in the drawings.

The phrases "in one implementation," and "in some implementations," may each refer to one or more of the same or different implementations. The term "coupled" is defined as connected, whether directly or indirectly via intervening components, and is not necessarily limited to physical connections. The term "comprising" may mean "including, but not necessarily limited to" and specifically indicate open-ended inclusion or membership in the disclosed combination, group, series, and equivalents.

The term "and/or" herein is only an association relationship for describing associated objects and represents that three relationships may exist. For example, A and/or B may represent that: A exists alone, A and B exist at the same time, and B exists alone. "A and/or B and/or C" may represent that at least one of A, B, and C exists. Besides, the character "/" used herein generally represents that the former and latter associated objects are in an "or" relationship.

Additionally, any two or more of the following paragraphs, (sub)-bullets, points, actions, behaviors, terms, alternatives, examples, or claims in the present disclosure may be combined logically, reasonably, and properly to form a specific method. Any sentence, paragraph, (sub)-bullet, point, action, behaviors, terms, or claims in the present disclosure may be implemented independently and separately to form a specific method. Dependency, e.g., "based on", "more specifically", "preferably", "In one embodiment", "In one implementation", "In one alternative", in the present disclosure may refer to just one possible example that would not restrict the specific method.

For a non-limiting explanation, specific details, such as functional entities, techniques, protocols, standards, and the like, are set forth for providing an understanding of the disclosed technology. In other examples, detailed disclosure of well-known methods, technologies, systems, and architectures are omitted so as not to obscure the present disclosure with unnecessary details.

Persons skilled in the art will recognize that any disclosed network function(s) or algorithm(s) may be implemented by hardware, software, or a combination of software and hardware. Disclosed functions may correspond to modules that may be software, hardware, firmware, or any combination thereof. The software implementation may comprise computer-executable instructions stored on a computer-readable medium, such as memory or other types of storage devices. For example, one or more microprocessors or general-purpose computers with communication processing capability may be programmed with corresponding executable instructions and carry out the disclosed network function(s) or algorithm(s). The microprocessors or general-purpose computers may be formed of Application-Specific Integrated Circuits (ASICs), programmable logic arrays, and/or one or more Digital Signal Processors (DSPs). Although some of the disclosed implementations are directed to software installed and executing on computer hardware, nevertheless, alternative implementations, as firmware, or as hardware, or as a combination of hardware and software, are well within the scope of the present disclosure.

The computer-readable medium may include, but may not be limited to, Random Access Memory (RAM), Read-Only Memory (ROM), Erasable Programmable Read-Only Memory (EPROM), Electrically Erasable Programmable Read-Only Memory (EEPROM), flash memory, Compact Disc (CD) Read-Only Memory (CD-ROM), magnetic cassettes, magnetic tape, magnetic disk storage, or any other equivalent medium capable of storing computer-readable instructions.

A radio communication network architecture (e.g., a Long-Term Evolution (LTE) system, an LTE-Advanced (LTE-A) system, an LTE-Advanced Pro system, or a New Radio (NR) system) may typically include at least one base station (BS), at least one UE, and one or more optional network elements that provide connection with a network. The UE may communicate with the network (e.g., a Core Network (CN), an Evolved Packet Core (EPC) network, an Evolved Universal Terrestrial Radio Access Network (E-UTRAN), a Next-Generation Core (NGC), a 5G Core (5GC), or an internet) via a Radio Access Network (RAN) established by one or more BSs.

A UE according to the present disclosure may include, but is not limited to, a mobile station, a mobile terminal or device, a user communication radio terminal. For example, a UE may be a portable radio equipment that includes, but is not limited to, a mobile phone, a tablet, a wearable device, a sensor, or a Personal Digital Assistant (PDA) with wireless communication capability. The UE may be configured to receive and transmit signals over an air interface to one or more cells in a RAN.

A BS may include, but is not limited to, a node B (NB) as in the Universal Mobile Telecommunication System (UMTS), an evolved node B (eNB) as in the LTE-A, a Radio Network Controller (RNC) as in the UMTS, a Base Station Controller (BSC) as in the Global System for Mobile communications (GSM)/ GSM Enhanced Data rates for GSM Evolution (EDGE) RAN (GERAN), a next-generation eNB (ng-eNB) as in an Evolved Universal Terrestrial Radio Access (E-UTRA) BS in connection with the 5GC, a next-generation Node B (gNB) as in the 5G-RAN (or in the 5G Access Network (5G-AN)), and any other apparatus capable of controlling radio communication and managing radio resources within a cell. The BS may connect to serve the one or more UEs via a radio interface to the network.

A BS may be configured to provide communication services according to at least one of the following Radio Access Technologies (RATs): Worldwide Interoperability for Microwave Access (WiMAX), GSM (often referred to as 2G), GERAN, General Packet Radio Service (GRPS), UMTS (often referred to as 3G) according to basic Wideband-Code Division Multiple Access (W-CDMA), High-Speed Packet Access (HSPA), LTE, LTE-A, enhanced LTE (eLTE), NR) (often referred to as 5G), and/or LTE-A Pro. However, the present disclosure is not limited to these protocols.

The BS may be operable to provide radio coverage to a specific geographical area using a plurality of cells forming the RAN. The BS may support the operations of the cells. Each cell may be operable to provide services to at least one UE within its radio coverage. More specifically, each cell (often referred to as a serving cell) may provide services to serve one or more UEs within its radio coverage, (e.g., each cell schedules the downlink (DL) and optionally UL resources to at least one UE within its radio coverage for DL and optionally UL packet transmissions). The BS may communicate with one or more UEs in the radio communication system via the plurality of cells.

A cell may allocate Sidelink (SL) resources for supporting Proximity Service (ProSe), LTE SL services, and LTE/NR Vehicle-to-Everything (V2X) services. Each cell may have overlapped coverage areas with other cells. In Multi-RAT Dual Connectivity (MR-DC) cases, the primary cell of a Master Cell Group (MCG) or a Secondary Cell Group (SCG) may be called a Special Cell (SpCell). A Primary Cell (PCell) may refer to the SpCell of an MCG. A Primary SCG Cell (PSCell) may refer to the SpCell of an SCG. MCG may refer to a group of serving cells associated with the Master Node (MN), including the SpCell and optionally one or more Secondary Cells (SCells). An SCG may refer to a group of serving cells associated with the Secondary Node (SN), including the SpCell and optionally one or more SCells.

As disclosed previously, the frame structure for NR is to support flexible configurations for accommodating various next-generation (e.g., 5G) communication requirements, such as eMBB, mMTC, and URLLC, while fulfilling high reliability, high data rate, and low latency requirements. The orthogonal frequency-division multiplexing (OFDM) technology, as agreed in the 3rd Generation Partnership Project (3GPP), may serve as a baseline for an NR waveform. The scalable OFDM numerology, such as the adaptive sub-carrier spacing, the channel bandwidth, and the cyclic prefix (CP), may also be used. Additionally, two coding schemes are applied for NR: (1) low-density parity-check (LDPC) code and (2) polar code. The coding scheme adaption may be configured based on the channel conditions and/or the service applications.

Moreover, in a transmission time interval of a single NR frame, at least DL transmission data, a guard period, and UL transmission data should be included. The respective portions of the DL transmission data, the guard period, and the UL transmission data should also be configurable, for example, based on the network dynamics of NR. An SL resource may also be provided via an NR frame to support ProSe services or V2X services.

In 3GPP Rel-15 and Rel-16 NR, eMBB and URLLC are the targeted use cases for designing the 3GPP specification. Some IoTs, such as wearable, wireless sensor network, and video surveillance, have requirements of lower reliability and longer latency compared to URLLC and lower data rate requirements compared to eMBB. However, a UE (e.g., the above-mentioned IoT or so-called reduced capability (RedCap) UE) with requirements such as longer battery time and lower device complexity may not be easily supported by the current 3GPP specification. Specifically, if a RedCap UE only supports a maximum channel bandwidth of 5MHz, the RedCap UE may not be able to access a cell in a case that a bandwidth of the control resource set 0 (CORESET 0) is configured to be larger than 5MHz. Therefore, coexistence of RedCap UEs and legacy UEs in the same network (with eMBB and URLLC) needs to be considered, and initial access for the RedCap UEs should be specified.

A synchronization signal block (SSB) is used by a UE to measure the signal strength of a cell and includes a master information block (MIB), which configures CORESET 0 and search space 0 that are used for scheduling a system information block 1 (SIB1). The SIB1 carries parameters for cell selection. The UE evaluates the measured results according to the received parameters in SIB1 to determine whether to camp on the cell. If the SSB is to be used for a RedCap UE, the RedCap UE should at least support maximum channel bandwidth of 5MHz with 15kHz Sub-carrier Spacing (SCS). If 5MHz is the assumption of maximum channel bandwidth for all RedCap UEs, some configurations for CORESET 0 may not be supported by the RedCap UE. For example, if CORESET 0 is configured with 48 or 96 physical resource blocks (PRBs) with 15kHz SCS, the RedCap UE may not be able to receive SIB1 and thus cannot camp on the cell. Therefore, to support a RedCap UE, a gNB may need to configure CORESET 0 with a bandwidth smaller than the maximum channel bandwidth of the RedCap UE. However, this constraint may affect the Transport Block Size (TBS) or the code rate of SIB 1, which may have an impact on the legacy NR UEs. Therefore, SIB1 dedicated for a RedCap UE that is transmitted in a bandwidth equal or smaller than the maximum channel bandwidth supported by the RedCap UEs may need to be provided. On the other hand, a first initial DL bandwidth part (BWP) is the PRBs containing CORESET 0 and is used for receiving system information (SI), paging, random access channel (RACH) procedure related DL messages (e.g., random access response (RAR), message 4 (Msg4)), and other DL messages before a dedicated DL BWP is configured by a gNB. A second initial DL BWP may be configured by SIB 1, which fully contains the first initial DL BWP configured by MIB and may have a larger bandwidth than the first initial DL BWP, and may be used after receiving message 4 (Msg4) and before a dedicated DL BWP is configured by a gNB. Specifically, SIB1 configures a Type 1 common search space to be associated with CORESET 0 or associated with a CORESET configured by *commonControlResourceSet* for receiving the RAR, the Msg4, and other messages before the dedicated DL BWP is configured by the gNB, and a Type 2 common search space to be associated with CORESET 0 or associated with the CORESET configured by *commonControlResourceSet* for receiving paging messages. Since the frequency resources of the first initial DL BWP is that of CORESET 0 and since the CORESET configured by *commonControlResourceSet* is confined in CORESET 0 in frequency domain, all normal UEs (e.g. legacy NR UEs) and RedCap UEs in a cell receive messages such as SI, paging, RAR, and Msg4 in frequency resources within the frequency resources containing CORESET 0 before a dedicated DL BWP is configured in the RRC CONNECTED state or before the second initial DL BWP is applied, so it may be hard for a gNB to support some types of RedCap UEs with high connection density in a cell. Therefore, a method to offload RedCap UEs to frequency resources outside that of CORESET 0 before a dedicated DL BWP is configured in the RRC CONNECTED state may be needed.

In 3GPP Rel-15, downlink control information (DCI) is transmitted via one or more control channel elements (CCE) contained in a CORESET. A configuration of a CORESET includes the PRBs including the frequency domain resource of the CORESET and with the number of OFDM symbols including the time domain resource of the CORESET. One or more search spaces may be associated with a CORESET. A search space defines the frequency of occurrence of the associated CORESET, and one occurrence of the CORESET may be referred as a monitoring occasion. A configuration of a search space includes the periodicity and time offset of the search space and the duration of the search space (e.g., the consecutive number of slots in which one or more monitoring occasions exists). If the duration is one, only one or more monitoring occasions within one slot exists in each period. Otherwise, there exist one or more monitoring occasions within each slot of a number of slots indicated by the duration.

SIB1 includes information regarding the availability and scheduling (e.g., mapping of SIBs to SI messages, periodicity, SI-window size) of other SIBs with an indication whether one or more SIBs are only provided on-demand and, in that case, the configuration needed by the UE to perform the SI request. SIBs other than SIB1 are carried in SI messages, which are transmitted on a DL-SCH. SIBs having the same periodicity can be mapped to the same SI message. Each SI message is transmitted within periodically occurring time domain windows (referred to as SI-windows with same length for all SI messages). Each SI message is associated with an SI-window and the SI-windows of different SI messages do not overlap. That is, within one SI-window only the corresponding SI message is transmitted.

A Physical Broadcast Channel (PBCH) payload includes MIB from the RRC layer and information bits generated by the physical layer. Specifically, the bits in a transport block delivered to the physical layer are denoted by $\overline{a}_0, \overline{a}_1, \overline{a}_2, \overline{a}_3, ...,$ $\overline{a}_{\overline{A}-1}$, where $\overline{A}$ is the payload size generated by the RRC layer. The following additional timing-related PBCH payload bits $\overline{a}_A, \overline{a}_{\overline{A}+1}, \overline{a}_{\overline{A}+2}, \overline{a}_{\overline{A}+3}, ..., \overline{a}_{\overline{A}+7}$ are generated by the physical layer.

If *cellBarred* in MIB is set to be barred, a UE is barred from accessing the cell. If the carrier bandwidth indicated in SIB1 is equal to or larger than the UE maximum bandwidth and if the bandwidth of initial DL BWP is equal to or smaller than the UE maximum bandwidth, the UE may access the cell; otherwise, the cell is considered as barred. If the UE is unable to acquire MIB or SIB1, the UE treats the cell as barred for 300 seconds.

The cell selection criteria in 3GPP TS 38.304 is provided as follows.

The cell selection criterion S is fulfilled when Srxlev > 0 and Squal > 0, where:

$$\text{Srxlev} = Q_{\text{rxlevmeas}} - (Q_{\text{rxlevmin}} + Q_{\text{rxlevminoffset}}) - P_{\text{compensation}} - Q\text{offset}_{\text{temp}};$$

$$\text{Squal} = Q_{\text{qualmeas}} - (Q_{\text{qualmin}} + Q_{\text{qualminoffset}}) - Q\text{offset}_{\text{temp}}.$$

Definitions of parameters mentioned above are shown in Table 1.

Table 1

| Srxlev | Cell selection RX level value (dB) |
|---|---|
| Squal | Cell selection quality value (dB) |
| Qoffset$_{\text{temp}}$ | Offset (dB) temporarily applied to a cell as specified in 3GPP TS 38.331 |
| Q$_{\text{rxlevmeas}}$ | Measured cell RX level value (RSRP) |

(continued)

| $Q_{qualmeas}$ | Measured cell quality value (RSRQ) |
|---|---|
| $Q_{rxlevmin}$ | Minimum required RX level in the cell (dBm). If the UE supports SUL frequency for this cell, Qrxlevmin is obtained from q-RxLevMinSUL, if present, in SIB1, SIB2 and SIB4, additionally, if $Q_{rxleyminoffsetcellSUL}$ is present in SIB3 and SIB4 for the concerned cell, this cell specific offset is added to the corresponding Qrxlevmin to achieve the required minimum RX level in the concerned cell;<br><br>else Qrxlevmin is obtained from q-RxLevMin in SIB1, SIB2 and SIB4, additionally, if $Q_{rxleyminoffsetcell}$ is present in SIB3 and SIB4 for the concerned cell, this cell specific offset is added to the corresponding Qrxlevmin to achieve the required minimum RX level in the concerned cell. |
| $Q_{quahnin}$ | Minimum required quality level in the cell (dB). Additionally, if $Q_{qualminoffsetcell}$ is signalled for the concerned cell, this cell specific offset is added to achieve the required minimum quality level in the concerned cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN, as specified in 3GPP TS 23.122. |
| $Q_{quahninoffset}$ | Offset to the signalled $Q_{qualmin}$ taken into account in the Squal evaluation as a result of a periodic search for a higher priority PLMN while camped normally in a VPLMN, as specified in 3GPP TS 23.122. |
| $P_{compensation}$ | For FR1, if the UE supports the additionalPmax in the NR-NS-PmaxList, if present, in SIB1, SIB2 and SIB4:<br><br>$\max(P_{EMAX1} - P_{PowerClass}, 0) - (\min(P_{EMAX2}, P_{PowerClass}) - \min(P_{EMAX1}, P_{Powerclass}))$ (dB);<br>else:<br><br>$\max(P_{EMAX1} - P_{PowerClass}, 0)$ (dB)<br>For FR2, $P_{compensation}$ is set to 0. |
| $P_{EMAX1}$, $P_{EMAX2}$ | Maximum TX power level of a UE may use when transmitting on the uplink in the cell (dBm) defined as $P_{EMAX}$ in 3GPP TS 38.101. If UE supports SUL frequency for this cell, $P_{EMAX1}$ and $P_{EMAX2}$ are obtained from the p-Max for SUL in SIB1 and NR-NS-PmaxList for SUL respectively in SIB1, SIB2 and SIB4 as specified in 3GPP TS 38.331, else $P_{EMAX1}$ and $P_{EMAX2}$ are obtained from the p-Max and NR-NS-PmaxList respectively in SIB1, SIB2 and SIB4 for normal UL as specified in 3GPP TS 38.331. |
| $P_{PowerClass}$ | Maximum RF output power of the UE (dBm) according to the UE power class as defined in 3GPP TS 38.101. |

To transmit SIB 1 for RedCap UEs, configurations of CORESET 0 and search space 0 for RedCap UEs are disclosed. In the following, CORESET 0 and search space 0 for RedCap UEs are denoted as CORESET 0-RC and search space 0-RC and SIB 1 for RedCap UEs is denoted as SIB1-RC.

**Configurations for CORESET 0-RC and search space 0-RC**

In 3GPP Rel-15 NR, CORESET 0 and search space 0 are configured by *pdcch-ConfigSIB1* in MIB. *pdcch-ConfigSIB1* contains 8 bits. The 4 most significant bits (MSB) provide CORESET 0 configuration and the 4 least significant bits (LSB) provide search space 0 configuration. Configuration of CORESET 0 includes SSB and CORESET multiplexing pattern, number of PRBs, number of symbols, and RB offset from the SSB. Configurations of search space 0 include slot offset from the associated SSB, number of search space sets per slot, and first symbol index of the search space sets in a slot.

Configurations of CORESET 0-RC and search space 0-RC may include similar parameters as that of CORESET 0 and search space 0. Since reserved bits in MIB are limited, some parameters may need to be implicitly determined, for example, by using the same value as that of CORESET 0 and search space 0. Alternatively, SSB and MIB for RedCap UEs are disclosed, denoted as SSB-RC and MIB-RC, respectively. Configurations of CORESET 0-RC and search space 0-RC may be provided by the MIB-RC and SSB-RC.

Method 1: Configure CORESET 0-RC and search space 0-RC by SSB for legacy NR UEs

To configure CORESET 0-RC and search space 0-RC by SSB, the following bits of MIB may be utilized. The spare bit in MIB specified in 3GPP TS 38.331 may be used, as shown in Table 2.

Table 2

```
MIB ::=                           SEQUENCE {
    systemFrameNumber             BIT STRING (SIZE {6}),
    subCarrierSpacingCommon       ENUMERATED {scs15or60, scs30or120},
    ssb-SubcarrierOffset          INTEGER (0..15),
    dmrs-TypeA-Position           ENUMERATED {pos2, pos3},
    pdcch-ConfigSIB1              PDCCH-ConfigSIB1,
    cellBarred                    ENUMERATED {barred, notBarred},
    intraFreqReselection          ENUMERATED {allowed, notAllowed},
    spare                         BIT STRING (SIZE {1}}
}
```

The two reserved bits in PBCH payload, $\overline{a}_{\overline{A}+6}$, $\overline{a}_{\overline{A}+7}$, specified in 3GPP TS 38.212 may be used for carrier frequency below 6GHz and for operation without shared spectrum channel access.

The spare bit of MIB and the reserved bits (e.g., $\overline{a}_{\overline{A}+6}$, $\overline{a}_{\overline{A}+7}$) are used to indicate the configuration of CORESET 0-RC and search space 0-RC. Some of the bits may be used for configuration of CORESET 0-RC and some of the bits may be used for configuration of search space 0-RC. Alternatively, all of the bits may be used for configuration of CORESET 0-RC or all of the bits may be used for configuration of search space 0-RC. Some of the parameters for configuration of CORESET 0-RC and search space 0-RC may be fixed or determined implicitly from those of CORESET 0 and search space 0.

In one alternative, the spare bit and the reserved bits $\overline{a}_{\overline{A}+6}$, $\overline{a}_{\overline{A}+7}$ are all set to 0 to indicate that there is no configuration of CORESET 0-RC and search space 0-RC. Thus, RedCap UE may determine that the cell as barred in this case as SIB1 cannot be scheduled for the RedCap UE.

It is noted that CORESET 0-RC and search space 0-RC may or may not be the same as CORESET 0 and search space 0.

Method 2: Configure CORESET 0-RC and search space 0-RC by SSB-RC

SSB-RC is used for indicating a configuration of CORESET 0-RC. SSB-RC provides cell access information for a RedCap UE. The sequence and the mapping of sequence to physical resource element for an SSB-RC is the same as a legacy SSB. The content of MIB and other PBCH payload bits of an SSB-RC is basically the same as that of a legacy SSB, except some information bits may be different as detailed in the following. In some implementations, an SSB-RC may be used for a legacy UE. Regarding the frequency position of SSB-RC, there are two options that are disclosed.

Option 1. The center frequency of SSB-RC is located on a frequency that corresponds to a Global Synchronization Channel Number (GSCN), as specified in 3GPP TS 38.101.

For option 1, legacy NR UEs may select an SSB-RC. To provide backward compatibility, there are two alternatives to prevent the legacy NR UEs from selecting an SSB-RC.

Alternative 1: ssb-SubcarrierOffset in MIB-RC and $\overline{a}_{\overline{A}+5}$ in PBCH-RC payload indicates $k_{SSB}$ equals to 24, 25,..., 31 and use *pdcch-ConfigSIB1* to indicate the frequency of the SSB for legacy NR UE as specified in 3GPP TS 38.213. On the other hand, all or a subset of the spare bit in MIB carried in an SSB for legacy UE and the reserved bits $\overline{a}_{\overline{A}+6}$, $\overline{a}_{\overline{A}+7}$ in PBCH payload may be used to indicate the frequency position of an SSB-RC. The indication may be a GSCN offset. That is, the center frequency of an SSB-RC corresponds to the GSCN that is an offset from the GSCN corresponding to the center frequency of an SSB. In one example, the offset may be in units of multiple numbers of GSCN. The spare bit in MIB and the reserved bits $\overline{a}_{\overline{A}+6}$, $\overline{a}_{\overline{A}+7}$ in PBCH payload indicates an index to the following values: 2, 4, 6,..., 16 GSCN. In some examples, index 0 indicates that there is no SSB-RC.

Alternative 2: To prevent the legacy NR UEs from selecting an SSB-RC, *cellBarred* in SSB-RC is set to barred. In other words, a RedCap UE does not determine the cell as barred if *cellbarred* is set to barred.

For RedCap UEs to identify a detected SSB is an SSB-RC that is used for RedCap UEs, the spare bit in MIB-RC may be set to 1. In one example, the reserved bit $\overline{a}_{\overline{A}+6}$ or $\overline{a}_{\overline{A}+7}$ in PBCH-RC payload is set to 1 to identify that the SSB-RC is used for RedCap UEs. In some examples, the spare bit in MIB-RC and the reserved bits $\overline{a}_{\overline{A}+6}$, $\overline{a}_{\overline{A}+7}$ in PBCH-RC payload is used to indicate whether the SSB-RC is used for RedCap UE, or in other words, whether the SSB is identified as an SSB-RC, and whether the cell is barred. For example, the spare bit is set to 1 to indicate the SSB-RC is for RedCap UE, and the reserved bits $\overline{a}_{\overline{A}+6}$, $\overline{a}_{\overline{A}+7}$ are set to "00" or '01' to indicate the cell is barred or not barred, respectively. In one alternative, at least one of the spare bit and the reserved bits $\overline{a}_{\overline{A}+6}$, $\overline{a}_{\overline{A}+7}$ are used to indicate whether the SSB-RC is used for RedCap UE, and when it is indicated that the SSB-RC is not used for RedCap UE, the cell is considered by RedCap UE as barred.

In one implementation, *pdcch-ConfigSIB1* is used to indicate configuration of CORESET 0-RC and search space 0-RC.

Option 2. The center frequency of SSB-RC is located on a frequency that does not correspond to a GSCN as specified in 3GPP TS 38.101.

For option 2, a legacy NR UE does not select the SSB-RC. Since the center frequency of SSB-RC is not located on a frequency with a corresponding GSCN, RedCap UEs are not able to detect SSB-RC on sync raster. Therefore, SSB for legacy NR UE should indicate the frequency position of an SSB-RC. For indication of the frequency position, all or a subset of the spare bit in MIB and the reserved bits $\overline{a}_{\overline{A}+6}$, $\overline{a}_{\overline{A}+7}$ may be used. For this alternative, SSB-RC overlaps with 20 PRBs. In other words, there is no subcarrier grid offset between SSB-RC and other DL channels.

Method 3: Configure CORESET 0-RC and search space 0-RC by SIB1 for legacy NR UEs. For this method, CORESET 0 is configured with a number of PRBs smaller than the maximum channel bandwidth supported by RedCap UEs. For example, RedCap UEs at least support 5MHz channel bandwidth, and CORESET 0 is configured with 24 PRBs with 15kHz SCS if a network supports the RedCap UEs in a cell.

In one implementation, SIB1 may include new information elements (IEs). First, an IE for indicating a CORESET 0-RC configuration may include a PRB offset of CORESET 0-RC from a reference point, a number of symbols of CORESET 0-RC, and a number of PRBs of CORESET 0-RC. Second, an IE for indicating a search space 0-RC configuration may include a slot offset from associated SSB, a number of search space sets per slot, and first symbol indices of the search space sets in a slot.

In one example, the reference point may be the PRB with the lowest PRB index that overlaps with SSB.

In one example, the reference point may be the PRB with the largest PRB index that overlaps with SSB.

In one example, the reference point may be PRB #n+1, where PRB #n is the PRB with the largest PRB index that overlaps with SSB.

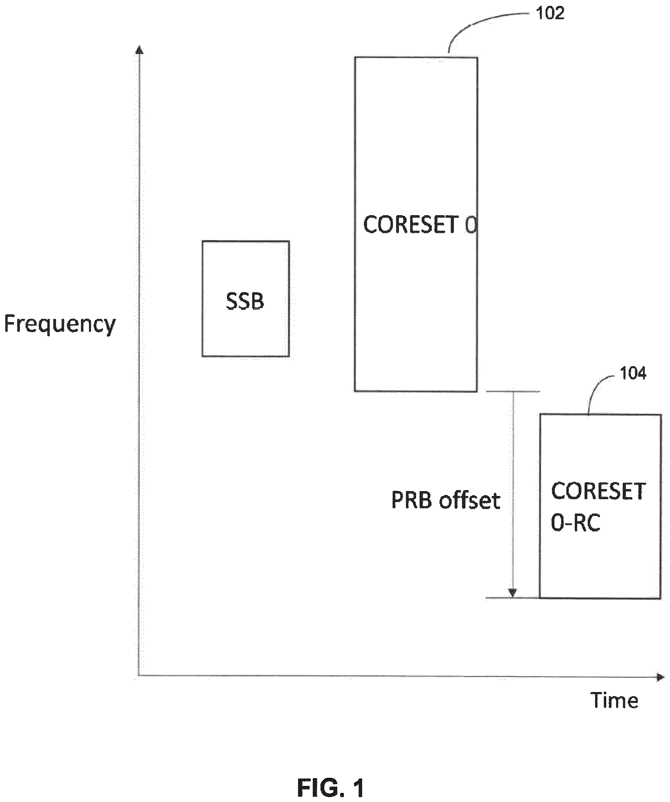

In one example, the reference point may be the PRB of CORESET 0 with the lowest PRB index. FIG. 1 is a timing/frequency diagram illustrating a reference point for a PRB offset, according to an implementation of the present disclosure. As illustrated in FIG. 1, the starting PRB of the CORESET 0-RC 104 is the PRB offset from the PRB with the lowest PRB index of the CORESET 0 102. The PRB offset mentioned above may be indicated by an IE of SIB1.

In one example, the reference point may be the PRB of CORESET 0 with the largest PRB index.

In one example, the reference point may be PRB #n+1, where PRB #n is the PRB of CORESET 0 with the largest PRB index.

In one example, the starting PRB of CORESET 0-RC may be indicated by a Common Resource Block (CRB) index. The CRB grid is determined by *offsetToCarrier* in SIB1 as specified in 3GPP TS 38.211 v15.7.0.

For the methods mentioned above, SIB1-RC is scheduled by a DCI in search space 0-RC associated with CORESET 0-RC. In one example, the CRC of the scheduling DCI is scrambled with a new RNTI (e.g., SI-RC-RNTI). In some examples, the DCI format of the scheduling DCI is a new DCI format with new fields (e.g., a repetition number field that indicates the number of repetitions for the PDSCH carrying SIB1-RC scheduled by the DCI) provided for RedCap UEs. SIB1-RC provides SI for RedCap UE. The SIB1-RC may or may not be the same as SIB1 for legacy UE.

**SIB1-RC transmission**

Method 4: SIB1-RC is contained in SIB1. No explicit SIB1-RC message or IE are provided. A new version of some existing IEs in SIB1 may be used for RedCap UEs.

In this case, CORESET 0-RC and search space 0-RC may not be needed. Instead, SIB1-RC may be scheduled by a DCI in Type 0 common search space (CSS) or Type 0A CSS.

In one implementation, a UE receives DCI scheduling SIB1 in search space 0 associated with CORESET 0 configured by MIB. In one example, SIB1-RC is delta information of SIB1, and the RedCap UE will apply IEs in SIB1 and SIB1-RC together to acquire whole information (e.g., SIB1-RC only provides additional information or differential value by a new version of some existing IEs in SIB1). A gNB may configure CORESET 0 with bandwidth supported by the RedCap UEs if it supports the RedCap UEs in a cell.

The new IEs are disclosed. In one example, *cellSelectionInfo-RC* is included in SIB1 for RedCap UEs. RedCap UEs perform cell selection evaluation by replacing the parameters in *cellSelectionInfo* with *cellSelectionInfo-RC* according to the cell selection criteria specified in TS 38.304.

In some examples, power class-specific parameters are included in *cellSelectionInfo-RC*. A RedCap UE with a power class applies the parameters specific for the power class for cell selection evaluation. For example, *q-RxLevMinOffsetForXdBm* and *q-QualMinOffsetForXdBm* may be applied for the RedCap UE of X dBm power class, and thus the UE replaces q-*RxLevMinOffset* and *q-QualMinOffset* with *q-RxLevMinOffsetForXdBm* and *q-QualMinOffsetForXdBm* for cell selection evaluation.

In some examples, *servingCellConfigCommon-RC* is included in SIB 1 for RedCap UEs. For the RedCap UEs, serving cell configuration is based on the parameters in *servingCellConfigCommon-RC*. The RedCap UEs apply the parameters in *servingCellConfigCommon* if the corresponding parameters in *servingCellConfigCommon-RC* are absent.

In some examples, *ue-TimersAndConstants-RC* is included in SIB 1 for RedCap UEs. The parameters in *ue-TimersAndConstants-RC* are replaced with those in *ue-TimersAndConstants* for the RedCap UEs.

For other SIs (e.g., SIB2, SIB3, SIB4, and SIB5) including information for cell reselection, a RedCap UE may apply the parameters in the SIBs for cell reselection evaluation.

In some examples, a new version of some existing IEs in SIB2, SIB3, SIB4, and SIB5 may be applied for RedCap UEs.

Method 5: SIB1-RC is provided as a new SIB type (e.g., SIB10). RedCap UEs obtain SIB1-RC following the procedure for acquiring other SI as specified in 3GPP TS 38.331.

A gNB configures *searchSpaceOtherSystemInformation* in SIB1. RedCap UEs monitor a Type-0A common search space configured by *searchSpaceOtherSystemInformation* for SIB1-RC scheduled by a DCI. In one example, the SIB1 includes a search space specifically for the SIB1-RC. In some examples, a CORESET associated with the search space configured specifically for the SIB1-RC may also be specifically configured for the SIB1-RC. In some examples, the CORESET configured specifically for SIB1-RC may not be included in an initial DL BWP.

In some examples, SIB1-RC is included in an SI message with other SIB types.

In some examples, SIB1-RC is included in an SI message that only includes SIB1-RC.

In some examples, SIB1-RC includes IEs corresponding to the IEs in SIB1 (for example, *cellSelectionInfo-RC, cellAccessRelatedInfo-RC, servingCellConfigCommon-RC)*.

In some examples, RedCap UEs apply the parameters in SIB1 if the corresponding parameters in SIB1-RC are absent.

For other SIBs (e.g., SIB2-RC, SIB3-RC, SIB4-RC, and SIB5-RC) including information for cell reselection, a gNB may provide scheduling information in SIB1-RC for scheduling the SI messages including the SIBs.

**Coverage recovery for DL/UL channel before a dedicated RRC configuration**

For RedCap UEs, coverage may be reduced compared to legacy NR UEs because of a smaller number of antennas or a smaller power class. For example, RedCap UEs may only be equipped with 1 antenna, as opposed to legacy NR UEs that are equipped with 2 or 4 antennas. Repetition of channels may be used for coverage recovery. Repetition of PDSCH, physical uplink shared channel (PUSCH) and physical uplink control channel (PUCCH) are supported. For PDSCH, the number of repetitions is configured by *pdsch-AggregationFactor.* For PUSCH, the number of repetitions is configured by *pusch-AggregationFactor.* For PUCCH, the number of repetitions is configured by *nrofSlots.* All parameters are provided by a dedicated RRC configuration.

To recover the coverage loss, repetition should be enabled for DL channels and UL channels before a dedicated RRC configuration (e.g., PDSCH carrying SIB1, PRACH, RAR, Msg3, Msg4, etc.).

In one implementation, for PDCCH scheduling SIB1-RC, PDCCH scheduling RAR, PDCCH scheduling (re) transmission of Msg3, PDCCH scheduling Msg4, the number of repetitions may be preconfigured.

For example, for PDCCH in Type 0 CSS and PDSCH carrying SIB1-RC, the number of repetitions may be configured together with the configuration of CORESET 0-RC and search space 0-RC. For PDCCH scheduling RAR, PDCCH scheduling (re)transmission of Msg3, PDCCH scheduling Msg4 and the corresponding PDSCH and PUSCH, the number of repetitions may be configured in SIB1.

In one example, the pre-configuration of the number of DCI repetitions is provided together with the configuration of the corresponding CORESET and search space. For PDCCH scheduling SIB1-RC, configurations of CORESET 0-RC and search space 0-RC may be provided via the above-mentioned Method 1, Method 2, and Method 3. Alternatively, CORESET and search space for receiving SIB1-RC may be configured via the above-mentioned Method 5 (e.g., SIB-RC is provided as a new SIB type). For PDCCH scheduling RAR, PDCCH scheduling (re)transmission of Msg3, PDCCH scheduling Msg4, configuration of CORESET and search space (e.g., Type 1 common search space associated with the CORESET (e.g., CORESET 0-RC)) may be provided in SIB1-RC.

In some examples, one or more candidates for the number of DCI repetitions may be configured, and a UE blindly decodes the DCI with multiple hypotheses on the number of DCI repetitions. For example, a cell activates the repetition via the spare bit in MIB. When the spare bit is set to "1", the RedCap UE applies a preconfigured number of repetitions used for receiving a DCI in CORESET 0-RC and search space 0-RC. In some examples, the spare bit in MIB and the reserved bits $a_{\overline{A}+6}$, $a_{\overline{A}+7}$ in PBCH payload may be used to indicate the number of repetitions of DCI scheduling SIB1 or SIB1-RC in CORESET 0-RC and search space 0-RC.

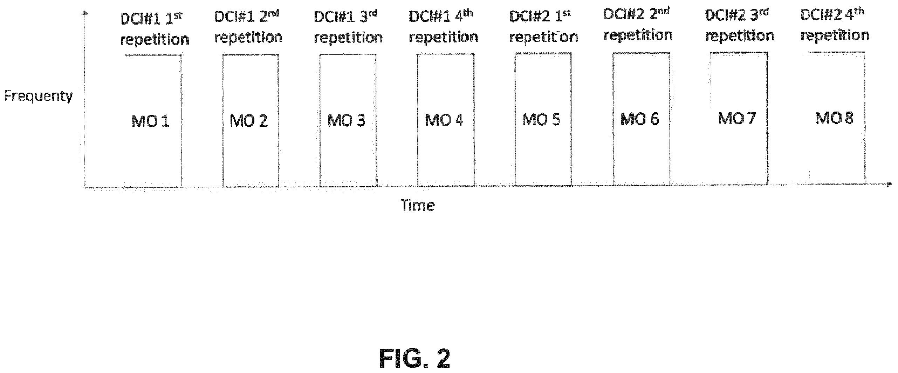

In some examples, each repetition of a number of DCI repetitions is transmitted in a monitoring occasion. The DCI repetitions are transmitted in consecutive monitoring occasions of a search space. In one example, a candidate for the first DCI repetition of a number of DCI repetitions may be in every monitoring occasion. In some examples, a candidate for the first DCI repetition of a number of DCI repetitions may be in a subset of the monitoring occasions. For example, if the number of DCI repetitions is '4', the first DCI repetition may be in every fourth monitoring occasion. FIG. 2 is a timing diagram illustrating DCI repetitions, according to an implementation of the present disclosure. As illustrated in FIG. 2, there are two DCI repetitions DCI#1 and DCI#2, where both of the number of DCI repetitions is '4'. That is, DCI#1 and DCI#2 transmissions (including 1st repetition, 2nd repetition, 3rd repetition, and 4th repetition) are continuously occurring in four monitoring occasions, respectively. Therefore, the DCI#1 (e.g., DCI#1 1st repetition, DCI#1 2nd repetition, DCI#1 3rd repetition, and DCI#1 4th repetition) is transmitted in monitoring occasions MO 1-MO 4, and the DCI#2 (e.g., DCI#2 1st repetition, DCI#2 2nd repetition, DCI#2 3rd repetition, and DCI#2 4th repetition) is transmitted in monitoring occasions MO 5-MO 8.

In some examples, one or more DCI repetitions may be transmitted in a monitoring occasion of a search space. The starting CCE of each DCI repetition may have a number of CCE offset from the starting CCE of the first DCI repetition, where the candidate position of the first DCI repetition may be determined as specified in 3GPP TS 38.213.

For PDCCH and the corresponding PDSCH carrying SIB 1-RC, RAR, Msg3, Msg4, a number of repetitions may be preconfigured and the pre-configuration of the number of repetitions is provided together with the configuration of the CORESET and search space for the corresponding DCI.

In some examples, the pre-configuration provides one or multiple candidates for a number of repetitions, and the DCI scheduling the PDSCH indicates a codepoint mapped to a number of repetitions.

In some examples, for PDSCH carrying RAR, Msg3, Msg4, a candidate number of repetitions may be configured together in a time domain resource assignment (TDRA) table, so the DCI indicates the repetition number by a TDRA field in the DCI. In one example, the TDRA table may be configured by SIB1-RC.

## UE distribution across BWPs without a dedicated signal

For some use cases, such as industrial sensors, a high density of RedCap UEs may need to be supported. To avoid a large number of UEs from being crowded in an initial DL/UL BWP, a mechanism to distribute UEs across BWPs without a dedicated RRC message or Layer 1 signal is disclosed.

In one implementation, from a network perspective, one or more initial DL/UL BWPs are supported, so RedCap UEs may perform random access procedures on different BWPs.

Multiple BWPs that are used for a random access procedure are configured by a gNB, and a UE may randomly select an initial BWP for a random access procedure. In one example, the UE selects the initial UL BWP after the UE selects an SSB, and an initial UL BWP may be selected if a PRACH resource or a PRACH preamble in the initial UL BWP is associated with the selected SSB according to SSB-to-RO mapping as specified in 3GPP TS 38.213.

In some examples, the UL BWPs and the corresponding PRACH resource in each UL BWP that is used for a random access procedure are configured via SIB 1-RC. In some examples, the UL BWPs and the corresponding PRACH resource in each UL BWP that is used for a random access procedure are configured via SIB1 if SIB1-RC is not provided to RedCap UEs. In some examples, the DL BWPs, the corresponding CORESET 0-RC, the associated Type 1 common search space, and the associated Type 2 common search space in each DL BWP that is used for a random access procedure and paging are configured via SIB1-RC. In some examples, the DL BWPs, the corresponding CORESET 0-RC, the associated Type 1 common search space, and the associated Type 2 common search space in each DL BWP that is used for a random access procedure and paging are configured via SIB1 if SIB1-RC is not provided to RedCap UEs.

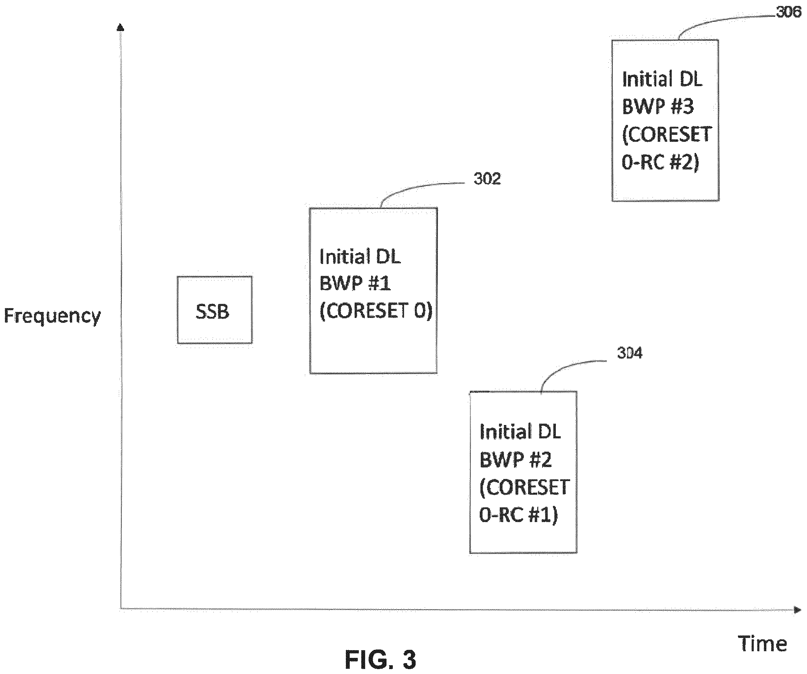

Configurations of multiple DL BWPs, the corresponding CORESET 0-RC, and an associated Type 1 common search space or an associated Type 2 common search space may not have a specific relation with the initial DL BWP configured for legacy NR UEs. For better resource utilization, the configurations may have the following restrictions. For example, a DL BWP that is selected as an initial DL BWP may overlap the initial DL BWP configured for legacy NR UEs. In some examples, the DL BWP may be confined in an initial DL BWP configured via SIB1 for legacy NR UEs. To avoid PDCCH blocking between legacy NR UEs and RedCap UEs, the CORESET 0-RC of the DL BWP does not overlap or partially overlap the CORESET 0 or a CORESET configured via *commonControlResourceSet* that is configured for legacy NR UEs in frequency domain. FIG. 3 is a timing/frequency diagram illustrating configurations of DL BWPs, according to an implementation of the present disclosure. The initial DL BWP #1 is configured for the legacy NR UE, and initial DL BWP #2 and initial DL BWP #3 are configured for RedCap UEs. As illustrated in FIG. 3, the CORESET 0 302 of the initial DL BWP #1 for the legacy NR UE in the frequency domain does not overlap the CORESET 0-RC #1 304 of the initial DL BWP #2 and the CORESET 0-RC #2 306 of the initial DL BWP #3.

In some examples, the CORESET 0-RC of the DL BWP may be confined in an initial DL BWP configured via SIB1 for legacy NR UEs. Configuration of a DL BWP that is used for a random access procedure or paging may be explicitly configured or may be determined implicitly by the frequency position and bandwidth of a CORESET 0-RC configured based on the above-mentioned Method 1, Method 2, and Method 3.

Configurations of multiple UL BWPs and the corresponding PRACH resource may not have a specific relation with the initial UL BWP configured for legacy NR UEs. For better resource utilization, the configurations may have the following restrictions. In one example, a UL BWP that is selected as an initial UL BWP may overlap the initial UL BWP configured for legacy NR UEs. To avoid a PRACH resource or PRACH preamble selected by both legacy NR UEs and RedCap UEs associated with different SSBs, PRACH resources or PRACH preambles in the UL BWP should not be the same as the PRACH resources or PRACH preambles in the initial UL BWP configured for legacy NR UEs. In some examples, all PRACH resources and PRACH preambles in the UL BWP should be the same as part of the PRACH resources and PRACH preambles in the initial UL BWP configured for legacy NR UEs. To save signaling overhead, a PRACH resource of an initial UL BWP may be implicitly determined according to the PRACH resources configured via SIB1 for legacy NR UEs. For example, a UE determines that a PRACH resource and the PRACH preambles in the PRACH resource are used for an initial UL BWP if the initial UL BWP contains the PRACH resource in the frequency domain.

The selected initial DL BWP is used for receiving RAR and Msg4, and the selected initial UL BWP is used for transmitting the PRACH preamble and Msg3. Subsequent DL and UL messages and data are received and transmitted on the selected initial DL BWP and initial UL BWP, respectively.

In one example, the initial DL BWP that is selected is linked to an initial UL BWP that is selected. A UE randomly selects an initial UL BWP, and selects the initial DL BWP linked to the selected initial UL BWP.

In some examples, the linkage between an initial DL BWP and an initial UL BWP may be explicitly configured. In some examples, the initial DL BWP linked to an initial UL BWP is configured together with the PRACH resource configuration for the initial UL BWP. In some examples, the CORESET and search space configurations of an initial DL BWP linked to an initial UL BWP is configured together with the PRACH resource configuration for the initial UL BWP.

In some examples, the linkage between a DL BWP and a UL BWP may be implicitly determined according to the index of the BWPs (e.g., DL BWP and UL BWP with the same *BWP-Id* are linked).

In some examples, the initial DL BWP determined according to the bandwidth of CORESET 0 may also be selected by RedCap UEs as the initial DL BWP. In some examples, the initial UL BWP configured via SIB1 may also be selected by RedCap UEs as the initial UL BWP.

In some examples, the initial UL BWP is randomly selected from the configured initial UL BWPs.

In some examples, a UE randomly selects from the initial UL BWPs with bandwidth smaller than the maximum UL channel bandwidth supported by the UE.

In some examples, a UE randomly selects from the initial UL BWPs that have bandwidth smaller than the maximum UL channel bandwidth supported by the UE and has linked initial DL BWP with bandwidth smaller than the maximum DL channel bandwidth supported by the UE.

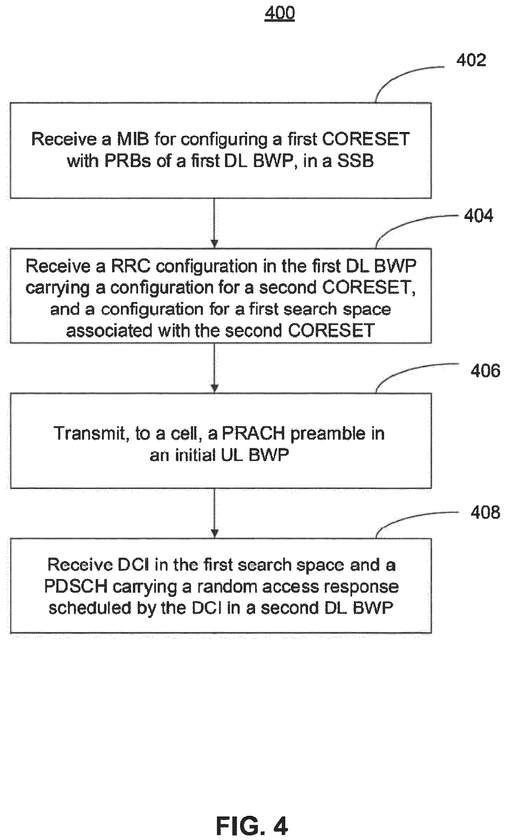

FIG. 4 is a flowchart illustrating a method 400 for a UE (e.g., RedCap UE) to perform an initial access, according to an implementation of the present disclosure. In action 402, the UE receives a MIB for configuring a first CORESET (e.g., CORESET 0) with PRBs of a first DL BWP, in an SSB. In action 404, the UE receives an RRC configuration (e.g., SIB1 or SIB-RC) in the first DL BWP carrying a configuration for a second CORESET (e.g., CORESET 0-RC) and a configuration for a first search space (e.g., Type 1 common search space) associated with the second CORESET. In action 406, the UE transmits, to a cell, a PRACH preamble in an initial UL BWP. In action 108, the UE receives DCI in the first search space and a PDSCH carrying a random access response scheduled by the DCI in a second DL BWP (e.g., Type 2 common search space associated with CORESET 0-RC).

In one implementation, the UE receives another RRC configuration (e.g., SIB1 or SIB-RC) carrying a configuration for a second search space associated with the second CORESET and receives a DCI in the second search space and a PDSCH carrying a paging message scheduled by the DCI in the second DL BWP. In one example, the second DL BWP does not fully overlap the first DL BWP.

The above-mentioned configuration for the first search space associated with the second CORESET includes a number of repetitions for receiving the DCI. Therefore, the UE receives repetitions of the DCI in consecutive monitoring occasions of the first search space associated with the second CORESET. In one example, each repetition is received in a corresponding monitoring occasion, and the first repetition of the repetitions of the DCI is received in the (X+1)-th monitoring occasion of the first search space associated with the second CORESET, X being the number of repetitions of the DCI multiplied by a non-negative integer.

The above-mentioned RRC configuration carrying the configuration for the first search space associated with the second CORESET is associated with a configuration of the initial UL BWP, and a bandwidth of the initial UL BWP is equal to or smaller than a maximum bandwidth of the UE.

In one implementation, the UE determines that the cell is barred when the RRC configuration carrying the configuration for the first search space associated with the second CORESET is not received.

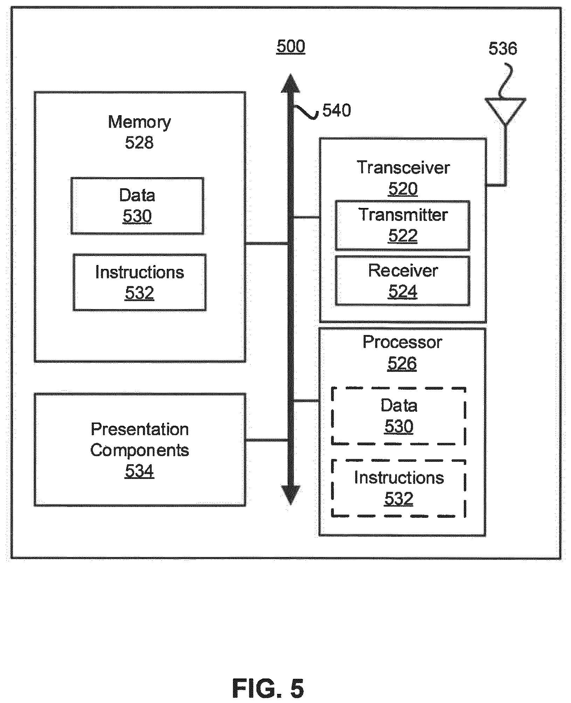

FIG. 5 is a block diagram illustrating a node 500 for wireless communication, according to an implementation of the present disclosure.

As illustrated in FIG. 5, the node 500 may include a transceiver 520, a processor 526, a memory 528, one or more presentation components 534, and at least one antenna 536. The node 500 may also include a Radio Frequency (RF) spectrum band module, a BS communications module, a network communications module, and a system communications management module, input/output (I/O) ports, I/O components, and a power supply (not illustrated in FIG. 5).

Each of these components may be in communication with each other, directly or indirectly, over one or more buses 540. The node 500 may be a UE or a BS that performs various disclosed functions illustrated in FIG. 4.

The transceiver 520 may include a transmitter 522 (with transmitting circuitry) and a receiver 524 (with receiving circuitry) and may be configured to transmit and/or receive time and/or frequency resource partitioning information. The transceiver 520 may be configured to transmit in different types of subframes and slots including, but not limited to, usable, non-usable, and flexibly usable subframes and slot formats. The transceiver 520 may be configured to receive data and control channels.

The node 500 may include a variety of computer-readable media. Computer-readable media may be any media that can be accessed by the node 500 and include both volatile (and non-volatile) media, and removable (and non-removable) media. Computer-readable media may include computer storage media and communication media. Computer storage media may include both volatile (and/or non-volatile), as well as removable (and/or non-removable), media implemented according to any method or technology for storage of information, such as computer-readable media.

Computer storage media may include RAM, ROM, EPROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer storage media do not include a propagated data signal.

Communication media may typically embody computer-readable instructions, data structures, program modules or other data in a modulated data signal such as a carrier wave or other transport mechanisms and include any information delivery media. The term "modulated data signal" may mean a signal that has one or more of its characteristics set or changed in such a manner as to encode information in the signal. Communication media may include wired media, such as a wired network or direct-wired connection, and wireless media, such as acoustic, RF, infrared, and other wireless media. Combinations of any of the disclosed media should be included within the scope of computer-readable media.

The memory 528 may include computer-storage media in the form of volatile and/or non-volatile memory. The memory 528 may be removable, non-removable, or a combination thereof. For example, the memory 528 may include solid-state memory, hard drives, optical-disc drives, etc. As illustrated in FIG. 5, the memory 528 may store computer-readable and/or computer-executable instructions 532 (e.g., software codes) that are configured to, when executed, cause the processor 526 (e.g., processing circuitry) to perform various disclosed functions. Alternatively, the instructions 532 may not be directly executable by the processor 526 but may be configured to cause the node 500 (e.g., when compiled and executed) to perform various disclosed functions.

The processor 526 may include an intelligent hardware device, a central processing unit (CPU), a microcontroller, an ASIC, etc. The processor 526 may include memory. The processor 526 may process the data 530 and the instructions 532 received from the memory 528, and information through the transceiver 520, the baseband communications module, and/or the network communications module. The processor 526 may also process information to be sent to the transceiver 520 for transmission via the antenna 536, to the network communications module for transmission to a CN.

One or more presentation components 534 may present data to a person or other devices. Presentation components 534 may include a display device, a speaker, a printing component, a vibrating component, etc.

From the present disclosure, it is evident that various techniques can be utilized for implementing the disclosed concepts. Moreover, while the concepts have been disclosed with specific reference to specific implementations, a person of ordinary skill in the art would recognize that changes can be made in form and detail. As such, the present disclosure is to be considered in all respects as illustrative and not restrictive. It should also be understood that the present disclosure is not limited to the specific disclosed implementations, but that many rearrangements, modifications, and substitutions are possible.

**Claims**

1. A method of initial access performed by a user equipment (500), UE, the method comprising:

   receiving (402), in a synchronization signal block, SSB, a master information block, MIB, for configuring a first control resource set, CORESET, with physical resource blocks, PRBs, of a first downlink, DL, bandwidth part, BWP;
   receiving (404) a first radio resource control, RRC, configuration in the first DL BWP carrying a configuration for a first initial uplink, UL, BWP, and a second RRC configuration in the first DL BWP carrying a configuration for a second DL BWP, a second CORESET, a first search space associated with the second CORESET, and a second initial UL BWP;
   transmitting (406), to a cell, a physical random access channel, PRACH, preamble in the second initial UL BWP in a case that a bandwidth the first initial UL BWP is greater than a maximum UL channel bandwidth supported by the UE and a bandwidth of the second initial UL BWP is smaller than a maximum UL channel bandwidth supported by the UE; and
   receiving (408) downlink control information, DCI, in the first search space and a physical downlink shared channel, PDSCH, carrying a random access response scheduled by the DCI in the second DL BWP in a case that a bandwidth the first DL BWP is greater than a maximum DL channel bandwidth supported by the UE and a bandwidth of the second DL BWP is smaller than a maximum DL channel bandwidth supported by the UE, wherein:

> the second DL BWP includes the second CORESET,
> the first DL BWP is linked to the first initial UL BWP, and
> the second DL BWP is linked to the second initial UL BWP.

2. The method of claim 1, wherein the second DL BWP does not fully overlap the first DL BWP.

3. The method of claim 2, further comprising:
receiving second DCI in a second search space and a PDSCH carrying a paging message scheduled by the second DCI in the second DL BWP.

4. The method of claim 1, wherein:
the configuration for the first search space associated with the second CORESET includes a number of repetitions for receiving the DCI.

5. The method of claim 4, further comprising:
receiving a plurality of repetitions of the DCI in a plurality of consecutive monitoring occasions of the first search space associated with the second CORESET, wherein:

> each of the plurality of repetitions is received in a corresponding one of the plurality of consecutive monitoring occasions of the first search space associated with the second CORESET, and
> a first repetition of the plurality of repetitions of the DCI is received in the (X+1)-th monitoring occasion of the plurality of consecutive monitoring occasions of the first search space associated with the second CORESET, X being the number of repetitions for receiving the DCI multiplied by a non-negative integer.

6. The method of claim 1, wherein:
the second RRC configuration carrying the configuration for the first search space associated with the second CORESET is associated with a configuration of the second initial UL BWP.

7. The method of claim 1, wherein:
a bandwidth of the second initial UL BWP is equal to or small than a maximum bandwidth of the UE (500).

8. A user equipment (500), UE, for performing an initial access, the UE (500) comprising:

> at least one processor (526); and
> at least one memory (528) coupled to the at least one processor (526), the at least one memory (528) storing computer-executable instructions (532) that, when executed by the at least one processor (526), causes the UE (500) to:
>
>> receive (402), in a synchronization signal block, SSB, a master information block, MIB, for configuring a first control resource set, CORESET, with physical resource blocks, PRBs, of a first downlink, DL, bandwidth part, BWP;
>> receive (404) a first radio resource control, RRC, configuration in the first DL BWP carrying a configuration for a first initial uplink, UL, BWP, and a second RRC configuration in the first DL BWP carrying a configuration for a second DL BWP, a second CORESET, a first search space associated with the second CORESET, and a second initial UL BWP;
>> transmit (406), to a cell, a physical random access channel, PRACH, preamble in the second initial UL BWP in a case that a bandwidth the first initial UL BWP is greater than a maximum UL channel bandwidth supported by the UE and a bandwidth of the second initial UL BWP is smaller than a maximum UL channel bandwidth supported by the UE; and
>> receive (408) downlink control information, DCI, in the first search space and a physical downlink shared channel, PDSCH, carrying a random access response scheduled by the DCI in the second DL BWP in a case that a bandwidth the first DL BWP is greater than a maximum DL channel bandwidth supported by the UE and a bandwidth of the second DL BWP is smaller than a maximum DL channel bandwidth supported by the UE, wherein:

the second DL BWP includes the second CORESET,
the first DL BWP is linked to the first initial UL BWP, and
the second DL BWP is linked to the second initial UL BWP.

9. The UE (500) of claim 8, wherein the second DL BWP does not fully overlap the first DL BWP.

10. The UE (500) of claim 9, wherein the computer-executable instructions (532) further cause the UE (500) to: receive second DCI in a second search space and a PDSCH carrying a paging message scheduled by the second DCI in the second DL BWP.

11. The UE (500) of claim 8, wherein:
the configuration for the first search space associated with the second CORESET includes a number of repetitions for receiving the DCI.

12. The UE (500) of claim 11, wherein the computer-executable instructions (532) further causes the UE to:
receive a plurality of repetitions of the DCI in a plurality of consecutive monitoring occasions of the first search space associated with the second CORESET, wherein:

each of the plurality of repetitions is received in a corresponding one of the plurality of consecutive monitoring occasions of the first search space associated with the second CORESET, and
a first repetition of the plurality of repetitions of the DCI is received in the (X+1)-th monitoring occasion of the plurality of consecutive monitoring occasions of the first search space associated with the second CORESET, X being the number of repetitions for receiving the DCI multiplied by a non-negative integer.

13. The UE (500) of claim 8, wherein:
the second RRC configuration carrying the configuration for the first search space associated with the second CORESET is associated with a configuration of the second initial UL BWP.

14. The UE (500) of claim 8, wherein the computer-executable instructions (532) further causes the UE (500) to:
a bandwidth of the second initial UL BWP is equal to or small than a maximum bandwidth of the UE (500).

## Patentansprüche

1. Verfahren eines Erstzugriffs, das von einer Benutzervorrichtung (500), UE, durchgeführt wird, wobei das Verfahren umfasst:

Empfangen (402), in einem Synchronisationssignalblock, SSB, eines Masterinformationsblocks, MIB, zum Konfigurieren eines ersten Control-Resource-Sets, CORESET, mit physikalischen Ressourcenblöcken, PRBs, eines ersten Downlink-, DL-, Bandbreitenabschnitts, BWP;
Empfangen (404) einer ersten Radio-Resource-Control-, RRC-, Konfiguration in dem ersten DL-BWP, das eine Konfiguration für einen ersten anfänglichen Uplink-, UL-, BWP trägt, und einer zweiten RRC-Konfiguration in dem ersten DL-BWP, das eine Konfiguration für einen zweiten DL-BWP, ein zweites CORESET, einen ersten Suchraum, der dem zweiten CORESET zugeordnet ist, und einen zweiten anfänglichen UL-BWP trägt;
Übertragen (406), an eine Zelle, einer Physical-Random-Access-Channel-, PRACH-, Präambel in den zweiten anfänglichen UL-BWP in einem Fall, in dem eine Bandbreite des ersten anfänglichen UL-BWP größer als eine maximale UL-Kanalbandbreite ist, die durch das UE unterstützt wird, und eine Bandbreite des zweiten anfänglichen UL-BWP kleiner als eine maximale UL-Kanalbandbreite ist, die durch das UE unterstützt wird; und
Empfangen (408) von Downlink-Control-Informationen, DCI, in dem ersten Suchraum und einem physikalischen Downlink-Shared-Channel, PDSCH, der eine Random-Access-Response trägt, die durch die DCI in dem zweiten DL-BWP geplant ist, in einem Fall, in dem eine Bandbreite des ersten DL-BWP größer als eine maximale DL-Kanalbandbreite ist, die durch das UE unterstützt wird, und eine Bandbreite des zweiten DL-BWP kleiner als eine maximale DL-Kanalbandbreite ist, die durch das UE unterstützt wird, wobei:

der zweite DL-BWP das zweite CORESET beinhaltet,
der erste DL-BWP mit dem ersten anfänglichen UL-BWP verknüpft ist, und

der zweite DL-BWP mit dem zweiten anfänglichen UL-BWP verknüpft ist.

2. Verfahren nach Anspruch 1, wobei der zweite DL-BWP den ersten DL-BWP nicht vollständig überlappt.

3. Verfahren nach Anspruch 2, ferner umfassend:
Empfangen einer zweiten DCI in einem zweiten Suchraum und eines PDSCH, der eine Paging-Nachricht trägt, die von der zweiten DCI in dem zweiten DL-BWP geplant wurde.

4. Verfahren nach Anspruch 1, wobei:
die Konfiguration für den ersten Suchraum, der dem zweiten CORESET zugeordnet ist, eine Anzahl von Wiederholungen für das Empfangen der DCI beinhaltet.

5. Verfahren nach Anspruch 4, ferner umfassend:
Empfangen einer Vielzahl von Wiederholungen der DCI in einer Vielzahl von aufeinanderfolgenden Überwachungsanlässen des ersten Suchraums, der dem zweiten CORESET zugeordnet ist, wobei:

jede der Vielzahl von Wiederholungen in einem entsprechenden der Vielzahl von aufeinanderfolgenden Überwachungsanlässen des ersten Suchraums empfangen wird, der dem zweiten CORESET zugeordnet ist, und eine erste Wiederholung der Vielzahl von Wiederholungen der DCI in dem (X+1)-ten-Überwachungsanlass der Vielzahl von aufeinanderfolgenden Überwachungsanlässen des ersten Suchraums empfangen wird, der dem zweiten CORESET zugeordnet ist, wobei X die Anzahl der Wiederholungen für das Empfangen der DCI multipliziert mit einer nicht-negativen ganzen Zahl ist.

6. Verfahren nach Anspruch 1, wobei:
die zweite RRC-Konfiguration, die die Konfiguration für den ersten Suchraum trägt, der dem zweiten CORESET zugeordnet ist, einer Konfiguration des zweiten anfänglichen UL-BWP zugeordnet ist.

7. Verfahren nach Anspruch 1, wobei:
eine Bandbreite des zweiten anfänglichen UL-BWP gleich oder kleiner als eine maximale Bandbreite des UE (500) ist.

8. Benutzergerät (500), UE, zum Durchführen eines Erstzugriffs, wobei das UE (500) aufweist:

mindestens einen Prozessor (526); und
mindestens einen Speicher (528), der mit dem mindestens einen Prozessor (526) gekoppelt ist, wobei der mindestens eine Speicher (528) computerausführbare Anweisungen (532) speichert, die, wenn sie von dem mindestens einen Prozessor (526) ausgeführt werden, das UE (500) veranlassen zum:

Empfangen (402), in einem Synchronisationssignalblock, SSB, eines Masterinformationsblocks, MIB, zum Konfigurieren eines ersten Control-Resource-Sets, CORESET, mit physikalischen Ressourcenblöcken, PRBs, eines ersten Downlink-, DL-, Bandbreitenabschnitts, BWP;
Empfangen (404) einer ersten Radio-Resource-Control-, RRC-, Konfiguration in dem ersten DL-BWP, das eine Konfiguration für einen ersten anfänglichen Uplink-, UL-, BWP trägt, und einer zweiten RRC-Konfiguration in dem ersten DL-BWP, das eine Konfiguration für einen zweiten DL-BWP, ein zweites CORESET, einen ersten Suchraum, der dem zweiten CORESET zugeordnet ist, und einen zweiten anfänglichen UL-BWP trägt;
Übertragen (406), an eine Zelle, einer Physical-Random-Access-Channel-, PRACH-, Präambel in den zweiten anfänglichen UL-BWP in einem Fall, in dem eine Bandbreite des ersten anfänglichen UL-BWP größer als eine maximale UL-Kanalbandbreite ist, die durch das UE unterstützt wird, und eine Bandbreite des zweiten anfänglichen UL-BWP kleiner als eine maximale UL-Kanalbandbreite ist, die durch das UE unterstützt wird; und
Empfangen (408) von Downlink-Control-Informationen, DCI, in dem ersten Suchraum und einem physikalischen Downlink-Shared-Channel, PDSCH, der eine Random-Access-Response trägt, die durch die DCI in dem zweiten DL-BWP geplant ist, in einem Fall, in dem eine Bandbreite des ersten DL-BWP größer als eine maximale DL-Kanalbandbreite ist, die durch das UE unterstützt wird, und eine Bandbreite des zweiten DL-BWP kleiner als eine maximale DL-Kanalbandbreite ist, die durch das UE unterstützt wird, wobei:

der zweite DL-BWP das zweite CORESET beinhaltet,
der erste DL-BWP mit dem ersten anfänglichen UL-BWP verknüpft ist, und

der zweite DL-BWP mit dem zweiten anfänglichen UL-BWP verknüpft ist.

9. UE (500) nach Anspruch 8, wobei der zweite DL-BWP den ersten DL-BWP nicht vollständig überlappt.

10. UE (500) nach Anspruch 9, wobei die computerausführbaren Anweisungen (532) das UE (500) ferner anweisen zum: Empfangen einer zweiten DCI in einem zweiten Suchraum und eines PDSCH, der eine Paging-Nachricht trägt, die von der zweiten DCI in dem zweiten DL-BWP geplant wurde.

11. UE (500) nach Anspruch 8, wobei die Konfiguration für den ersten Suchraum, der dem zweiten CORESET zugeordnet ist, eine Anzahl von Wiederholungen für das Empfangen der DCI beinhaltet.

12. UE (500) nach Anspruch 11, wobei die computerausführbaren Anweisungen (532) das UE ferner anweisen zum: Empfangen einer Vielzahl von Wiederholungen der DCI in einer Vielzahl von aufeinanderfolgenden Überwachungsanlässen des ersten Suchraums, der dem zweiten CORESET zugeordnet ist, wobei:

jede der Vielzahl von Wiederholungen in einem entsprechenden der Vielzahl von aufeinanderfolgenden Überwachungsanlässen des ersten Suchraums empfangen wird, der dem zweiten CORESET zugeordnet ist, und eine erste Wiederholung der Vielzahl von Wiederholungen der DCI in dem (X+1)-ten-Überwachungsanlass der Vielzahl von aufeinanderfolgenden Überwachungsanlässen des ersten Suchraums empfangen wird, der dem zweiten CORESET zugeordnet ist, wobei X die Anzahl der Wiederholungen für das Empfangen der DCI multipliziert mit einer nicht-negativen ganzen Zahl ist.

13. UE (500) nach Anspruch 8, wobei die zweite RRC-Konfiguration, die die Konfiguration für den ersten Suchraum trägt, der dem zweiten CORESET zugeordnet ist, einer Konfiguration des zweiten anfänglichen UL-BWP zugeordnet ist.

14. UE (500) nach Anspruch 8, wobei die computerausführbaren Anweisungen (532) das UE (500) ferner anweisen dazu, dass: eine Bandbreite des zweiten anfänglichen UL-BWP gleich oder kleiner als eine maximale Bandbreite des UE (500) ist.

**Revendications**

1. Procédé d'accès initial réalisé par un UE [user equipment - équipement utilisateur] (500), le procédé comprenant :

la réception (402), dans un SSB [synchronization signal block - bloc de signal de synchronisation], d'un MIB [master information block - bloc d'informations maître] pour configurer un premier CORESET [control resource set - ensemble de ressources de commande] avec des PRB [physical resource block - bloc de ressources physiques sur une première DL BWP [downlink bandwidth part - partie de bande passante en liaison descendante] ;
la réception (404) d'une première configuration RRC [radio resource control - commande de ressources radio] dans la première DL BWP portant une configuration pour une première UL BWP [uplink bandwidth part - partie de bande passante en liaison montante] initiale, et d'une deuxième configuration RRC dans la première DL BWP portant une configuration pour une deuxième DL BWP, un deuxième CORESET, un premier espace de recherche associé au deuxième CORESET, et une deuxième UL BWP initiale ;
la transmission (406), à une cellule, d'un préambule PRACH [physical random access channel - de canal physique d'accès aléatoire] dans la deuxième UL BWP initiale si une bande passante de la première UL BWP initiale est supérieure à une bande passante de canal UL maximale supportée par l'UE et si une bande passante de la deuxième UL BWP initiale est inférieure à une bande passante de canal UL maximale supportée par l'UE ; et
la réception (408) de DCI [downlink control information - informations de commande de liaison descendante] dans le premier espace de recherche et d'un PDSCH [physical downlink shared channel - canal physique partagé de liaison descendante] supportant une réponse d'accès aléatoire planifiée par les DCI dans la deuxième DL BWP si une bande passante de la première DL BWP est supérieure à une bande passante de canal DL maximale supportée par l'UE et si une bande passante de la deuxième DL BWP est inférieure à une bande passante de canal DL maximale supportée par l'UE, dans lequel :

la deuxième DL BWP comporte le deuxième CORESET,

la première DL BWP est liée à la première UL BWP initiale, et
la deuxième DL BWP est liée à la deuxième UL BWP initiale.

2. Procédé selon la revendication 1, dans lequel la deuxième DL BWP ne chevauche pas totalement la première DL BWP.

3. Procédé selon la revendication 2, comprenant en outre :
la réception de deuxième DCI dans un deuxième espace de recherche et d'un PDSCH supportant un message de radiomessagerie planifié par les deuxièmes DCI dans la deuxième DL BWP.

4. Procédé selon la revendication 1, dans lequel :
la configuration pour le premier espace de recherche associé au deuxième CORESET comporte un nombre de répétitions pour recevoir les DCI.

5. Procédé selon la revendication 4, comprenant en outre :
la réception d'une pluralité de répétitions des DCI dans une pluralité d'occasions de surveillance consécutives du premier espace de recherche associé au deuxième CORESET, dans lequel :

chacune de la pluralité de répétitions est reçue dans une occasion correspondante de la pluralité d'occasions de surveillance consécutives du premier espace de recherche associé au deuxième CORESET, et
une première répétition de la pluralité de répétitions des DCI est reçue dans la $(X+1)^{ième}$ occasion de surveillance de la pluralité d'occasions de surveillance consécutives du premier espace de recherche associé au deuxième CORESET, X étant le nombre de répétitions pour recevoir les DCI multiplié par un nombre entier non négatif.

6. Procédé selon la revendication 1, dans lequel :
la deuxième configuration RRC portant la configuration pour le premier espace de recherche associé au deuxième CORESET est associée à une configuration de la deuxième UL BWP initiale.

7. Procédé selon la revendication 1, dans lequel :
une largeur de bande de la deuxième UL BWP initiale est inférieure ou égale à une largeur de bande maximale de l'UE (500).

8. Equipement utilisateur (500) destiné à réaliser un accès initial, l'UE (500) comprenant :

au moins un processeur (526) ; et
au moins une mémoire (528) couplée à l'au moins un processeur (526), l'au moins une mémoire (528) stockant des instructions (532) pouvant être exécutées par ordinateur, qui, lorsqu'elles sont exécutées par l'au moins un processeur (526), amènent l'UE (500) à :

recevoir (402), dans un SSB, un MIB pour configurer un premier CORESET avec des PRB d'une première DL BWP ;
recevoir (404) une première configuration RRC dans la première DL BWP portant une configuration pour une première UL BWP, et une deuxième configuration RRC dans la première DL BWP portant une configuration pour une deuxième DL BWP, un deuxième CORESET, un premier espace de recherche associé au deuxième CORESET, et un deuxième UL BWP initiale ;
transmettre (406), à une cellule, un préambule PRACH dans la deuxième UL BWP initiale si une bande passante de la première UL BWP initiale est supérieure à une bande passante de canal UL maximale supportée par l'UE et si une bande passante de la deuxième UL BWP initiale est inférieure à une bande passante de canal UL maximale supportée par l'UE ; et
recevoir (408) des DCI dans le premier espace de recherche et un PDSCH portant une réponse d'accès aléatoire planifiée par les DCI dans la deuxième DL BWP si une bande passante de la première DL BWP est supérieure à une bande passante de canal DL maximale supportée par l'UE et si une bande passante de la deuxième DL BWP est inférieure à une bande passante de canal DL maximale supportée par l'UE, dans lequel :

la deuxième DL BWP comporte le deuxième CORESET,
la première DL BWP est liée à la première UL BWP initiale, et
la deuxième DL BWP est liée à la deuxième UL BWP initiale.

**9.** UE (500) selon la revendication 8, dans lequel la deuxième DL BWP ne chevauche pas complètement la première DL BWP.

**10.** UE (500) selon la revendication 9, dans lequel les instructions (532) pouvant être exécutées par ordinateur amènent en outre l'UE (500) à :
recevoir des deuxièmes DCI dans un deuxième espace de recherche et un PDSCH supportant un message de radiomessagerie planifié par les deuxièmes DCI dans la deuxième DL BWP.

**11.** UE (500) selon la revendication 8, dans lequel :
la configuration pour le premier espace de recherche associé au deuxième CORESET comporte un nombre de répétitions pour recevoir les DCI.

**12.** UE (500) selon la revendication 11, dans lequel les instructions (532) pouvant être exécutées par ordinateur amènent l'UE en outre à :
recevoir une pluralité de répétitions des DCI dans une pluralité d'occasions de surveillance consécutives du premier espace de recherche associé au deuxième CORESET, dans lequel :

chacune de la pluralité de répétitions est reçue à une occasion correspondante de la pluralité d'occasions de surveillance consécutives du premier espace de recherche associé au deuxième CORESET, et
une première répétition de la pluralité de répétitions des DCI est reçue dans la $(X+1)^{ième}$ occasion de surveillance de la pluralité d'occasions de surveillance consécutives du premier espace de recherche associé au deuxième CORESET, X étant le nombre de répétitions pour recevoir les DCI multiplié par un nombre entier non négatif.

**13.** UE (500) selon la revendication 8, dans lequel :
la deuxième configuration RRC portant la configuration pour le premier espace de recherche associé au deuxième CORESET est associée à une configuration de la deuxième UL BWP initiale.

**14.** UE (500) selon la revendication 8, dans lequel les instructions (532) pouvant être exécutées par ordinateur amènent en outre l'UE (500) à :
une largeur de bande de la deuxième UL BWP initiale est inférieure ou égale à une largeur de bande maximale de l'UE (500).

**FIG. 1**

FIG. 2

Initial DL BWP #3 (CORESET 0-RC #2)  306

Initial DL BWP #1 (CORESET 0)  302

Initial DL BWP #2 (CORESET 0-RC #1)  304

SSB

Frequency

Time

FIG. 3

400

402

Receive a MIB for configuring a first CORESET
with PRBs of a first DL BWP, in a SSB

404

Receive a RRC configuration in the first DL BWP
carrying a configuration for a second CORESET,
and a configuration for a first search space
associated with the second CORESET

406

Transmit, to a cell, a PRACH preamble in
an initial UL BWP

408

Receive DCI in the first search space and a
PDSCH carrying a random access response
scheduled by the DCI in a second DL BWP

# FIG. 4

**FIG. 5**

**EP 4 122 249 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019313437 A1

- WO 2020017434 A1

**Non-patent literature cited in the description**

- **LG ELECTRONICS**. RMSI delivery and CORESET configuration. *3GPP Draft R1-1715842*, 18 September 2017